# EUROPÄISCHE PATENTSCHRIFT

(11) **EP 3 880 989 B1**
(45) Veröffentlichungstag und Bekanntmachung des Hinweises auf die Patenterteilung: **07.12.2022**
(21) Anmeldenummer: 19794424.2
(22) Anmeldetag: 09.10.2019
(51) Int. Cl.: F16H 41/26, F16H 45/02, F16H 41/04

(54) **HYDRODYNAMISCHER WANDLER**
HYDRODYNAMIC CONVERTER
CONVERTISSEUR HYDRODYNAMIQUE

(30) Priorität: 14.11.2018 DE 102018128470
(43) Veröffentlichungstag der Anmeldung: 22.09.2021
(73) Patentinhaber: Voith Patent GmbH, 89522 Heidenheim (DE)
(72) Erfinder: KERNCHEN, Reinhard, 74589 Satteldorf (DE)
(74) Vertreter: Voith Patent GmbH - Patentabteilung
(86) Internationale Anmeldenummer: PCT/EP2019/077274
(87) Internationale Veröffentlichungsnummer: WO 2020/099031

(56) Entgegenhaltungen:
- WO-A2-02/14706
- DE-B3-102004 011 033
- DE-B3-102010 018 160
- US-A1- 2022 025 962

## Beschreibung

Die vorliegende Erfindung betrifft einen hydrodynamischen Wandler mit wenigstens einem Pumpenrad, wenigstens einem Turbinenrad und wenigstens einem Leitrad in einem Arbeitsraum zur Ausbildung eines hydrodynamischen Arbeitsmediumkreislaufes gemäß dem Oberbegriff von Anspruch 1.

Hydrodynamische Wandler sind seit vielen Jahrzehnten bekannt. Sie werden beispielsweise in hydrodynamischen Getrieben von Schienenfahrzeugen als Anfahrwandler oder als Marschwandler vorgesehen. Damit können automatische Zwei- oder auch Mehrganggetriebe geschaffen werden, je nach Anzahl der als hydrodynamische Leistungsüberträger eingesetzten Wandler. Anfahrwandler haben ihren Auslegungspunkt in der Regel bei einem Drehzahlverhältnis der Turbinendrehzahl zu der Pumpendrehzahl, das heißt dem Drehzahlverhältnis zwischen der Drehzahl des Turbinenrades und der Drehzahl des Pumpenrades, zwischen 0,4 bis 0,6, extreme Anfahrwandler auch um 0,3. Die Marschwandler weisen häufig ein entsprechendes Drehzahlverhältnis zwischen 0,8 und 0,9 auf. Damit läuft das Turbinenrad im Auslegungspunkt, das heißt bei Nenngeschwindigkeit des Fahrzeugs, langsamer um als das Pumpenrad. Bei den Marschwandlern kann das Turbinenrad bis zu einem Drehzahlverhältnis zwischen 1,3 bis ca. 1,5 je nach Auslegung der Kühlanlage im Schienenfahrzeug eingesetzt werden.

Ein solcher hydrodynamischer Wandler wird beispielsweise in DE 10 2010 018 160 B3 offenbart, wobei das Pumpenrad vom Arbeitsmedium der Kreislaufströmung im Arbeitsraum wenigstens teilweise zentrifugal durchströmt wird, ein Leitrad, das beim Wandler auch Leitschaufelkranz genannt wird, weil es im Gegensatz zum Pumpenrad und Turbinenrad nicht umläuft, vom Arbeitsmedium der Kreislaufströmung wenigstens teilweise zentripetal durchströmt und die Anströmrichtung des Arbeitsmediums der Kreislaufströmung auf das Turbinenrad parallel zur Drehachse in Axialrichtung des hydrodynamischen Wandlers verläuft, wohingegen die Abströmrichtung des Arbeitsmediums der Kreislaufströmung aus dem Turbinenrad teilweise zentripetal und teilweise in Axialrichtung, also diagonal verläuft.

Für industrielle Anwendungen werden hydrodynamische Wandler häufig als beeinflussbare Wandler mit einem verstellbaren Leitrad ausgeführt. Es können auch mehrere Leiträder vorgesehen sein, eines verstellbar und das andere feststehend. In dem verstellbaren Leitrad sind die Schaufeln während des Betriebes verstellbar, um damit die Leistungsaufnahme und die Leistungsübertragung des Wandlers stufenlos zu verändern.

Ein Ausführungsbeispiel für einen solchen hydrodynamischen Wandler wird beispielsweise in DE 10 2007 005 426 B3 offenbart.

Auch bei den herkömmlichen hydrodynamischen Wandlern für industrielle Anwendungen ist das Drehzahlverhältnis meist zugunsten einer hohen Drehmomentübertragung begrenzt, sie entsprechen in ihrer Auslegung den dargestellten Anfahr- und Marschwandlern.

WO 02/14706 A2 offenbart einen hydrodynamischen Wandler zur Anwendung bei einem Maschinensatz, bei dem der Antrieb eine Gasturbine ist und die Arbeitsmaschine ein Kompressor. Dabei geht es um außerordentlich hohe Leistungen, die in der Größenordnung von 20 MW oder darüber liegen. Aufgrund dieser extremen Leistungen weisen die Maschinen auch außerordentlich große umlaufende Massen auf. Der hydrodynamische Wandler hat einen extrem kleinen λ-Wert. Das Drehzahlverhältnis zwischen der Drehzahl des Turbinenrades und jener des Pumpenrades liegt in der Größenordnung von 1. Der Wirkungsgrad liegt in der Größenordnung von 0,75 und mehr. Das Pumpenrad ist im Wesentlichen zentrifugal und das Turbinenrad ist im Wesentlichen zentripetal durchströmt, wobei sich die Eintrittskanten der Pumpenradschaufeln und die Austrittskanten der Turbinenradschaufeln einander gegenüberstehen. Die Eintrittskanten der Pumpenradschaufeln und die Austrittskanten der Turbinenradschaufeln liegen näher bei der Wandlerdrehachse als die Austrittskanten der Pumpenradschaufeln und die Eintrittskanten der Turbinenradschaufeln.

DE 10 2004 011 033 B3 offenbart einen hydrodynamischen Wandler mit einem zentrifugal durchströmten Pumpenrad und einem zentripetal durchströmten Turbinenrad, wobei die Austrittskanten des Pumpenrades auf einem größeren Radius als die Eintrittskanten des Turbinenrades liegen. Ferner können die Eintrittskanten der Schaufeln des Pumpenrades auf einem größeren Radius als die Eintrittskanten der Schaufeln des Turbinenrades liegen. Zwischen dem Pumpenrad und dem Turbinenrad sind im radial äußeren Bereich Leitschaufeln vorgesehen, und zwischen dem Turbinenrad und dem Pumpenrad sind im radial inneren Bereich Leitschaufeln vorgesehen, wobei die Leitschaufeln axial durchströmt werden.

WO 2010/062269 A1 geht aus von einem hydrodynamischen Wandler der zuvor dargestellten Art und schlägt vor, das Pumpenrad zentripetal durchströmt radial außerhalb des Turbinenrades, das zentripetal oder axial durchströmt ist, anzuordnen. Leitschaufeln können dann ebenfalls zentripetal durchströmt vordem Pumpenrad positioniert werden.

Der vorliegenden Erfindung liegt die Aufgabe zugrunde, einen hydrodynamischen Wandler anzugeben, der besonders für ein hohes Drehzahlverhältnis im Auslegungspunkt, oberhalb des Drehzahlverhältnisses bisher bekannter Marschwandler, sowie für einen breiten Arbeitsbereich um den Auslegungspunkt geeignet ist.

Die erfindungsgemäße Aufgabe wird durch einen hydrodynamischen Wandler mit den Merkmalen von Anspruch 1 gelöst. In den abhängigen Ansprüchen werden vorteilhafte und besonders zweckmäßige Ausgestaltungen der Erfindung angegeben.

Ein erfindungsgemäßer hydrodynamischer Wandler weist einen Arbeitsraum zur Ausbildung eines hydrodynamischen Arbeitsmediumkreislaufes eines Arbeitsmediums auf. Als Arbeitsmedium kommt insbesondere Öl, aber auch ein anderes Medium, wie beispielsweise Wasser oder ein Wassergemisch, insbesondere Wasser-Glykol-Gemisch, in Betracht. Im Arbeitsraum sind wenigstens ein Pumpenrad, wenigstens ein Turbinenrad und wenigstens ein Leitrad in Strömungsrichtung des Arbeitsmediums hintereinander positioniert. In der Strömungsrichtung folgt dabei in der Regel ein Leitrad dem Pumpenrad und das Turbinenrad dem Leitrad. Ferner kann ein weiteres Leitrad beispielsweise in Strömungsrichtung vor dem Pumpenrad vorgesehen sein, wobei dieses Leitrad dann vorteilhaft verstellbar ist, das heißt, dass dessen Leitschaufeln oder zumindest ein Teil derselben um jeweils eine Drehachse, auch Schaufeldrehachse genannt, verdrehbar sind, sodass das Leitrad gegenüber der Arbeitsmediumströmung variabel anstellbar ist. Wenn ein verstellbares Leitrad vorgesehen ist, so spricht man auch von einem beeinflussbaren hydrodynamischen Wandler.

Der erfindungsgemäße Wandler ist insbesondere als sogenannter schnelllaufender Wandler ausgeführt, das heißt er weist ein besonders großes Auslegungsdrehzahlverhältnis auf, worauf später noch eingegangen wird.

Erfindungsgemäß ist das Pumpenrad zentrifugal, insbesondere rein zentrifugal, oder zentrifugal-diagonal mit dem Arbeitsmedium durchströmt und das Turbinenrad ist zentripetal, insbesondere rein zentripetal, oder zentripetal-diagonal vom Arbeitsmedium durchströmt.

Somit tritt das Arbeitsmedium zentripetal in das Turbinenrad ein und strömt zentripetal oder teilweise zentripetal und teilweise axial aus dem Turbinenrad ab.

Ein Radius einer Eintrittsgitterkante des Tubinenrades ist kleiner als oder gleich wie ein Radius einer Eintrittsgitterkante des Pumpenrades. Eine solche Eintrittsgitterkante des Turbinenrades kann auch als Eintrittskante der Schaufeln des Turbinenrades bezeichnet werden und bezeichnet die angeströmte Kante der Schaufeln des Turbinenrades. Entsprechend bezeichnet eine Austrittsgitterkante oder Austrittskante die abgeströmte Kante der Schaufeln des Turbinenrades. Entsprechendes gilt auch für die anderen Räder, das heißt das Pumpenrad und das oder die Leiträder.

Vorteilhaft ist der hydrodynamische Wandler als einstufiger hydrodynamischer Wandler mit einem einzigen Turbinenrad ausgeführt.

Bevorzugt ist auch nur ein einziges Pumpenrad vorgesehen, das für eine rein zentrifugale oder zentrifugal-diagonale Durchströmung mit dem Arbeitsmedium angeordnet ist. Demgemäß strömt das Arbeitsmedium zentrifugal in das Pumpenrad ein und zentrifugal aus dem Pumpenrad aus beziehungsweise zentrifugal in das Pumpenrad ein und teilweise zentrifugal sowie teilweise axial aus dem Pumpenrad aus.

Gemäß der Erfindung ist ein erstes Leitrad vorgesehen, beispielsweise das um eine Drehachse verstellbare Leitrad, wobei das Leitrad vorzugsweise für eine rein zentrifugale oder auch diagonal-zentrifugale Durchströmung mit dem Arbeitsmedium im Arbeitsraum angeordnet ist. Demgemäß strömt das Arbeitsmedium zentrifugal oder teilweise zentrifugal und teilweise axial in das erste Leitrad ein und zentrifugal aus dem ersten Leitrad aus. Die Stellschaufeln werden dabei in dem rein zentrifugal durchströmtem Bereich des Leitrades angeordnet

Das erste Leitrad ist im Arbeitsraum in Strömungsrichtung des Arbeitsmediums vor dem Pumpenrad angeordnet, insbesondere unmittelbar vor dem Pumpenrad. Bei einer unmittelbaren Anordnung des ersten Leitrades vor dem Pumpenrad ist kein weiteres Schaufelrad oder sind keine weiteren Schaufeln zwischen dem Austritt des ersten Leitrades und dem Eintritt in das Pumpenrad vorgesehen, das heißt die Austrittsgitterkante beziehungsweise die Austrittskanten der Schaufeln des Leitrades stehen der Eintrittsgitterkante beziehungsweise den Eintrittskanten der Schaufeln des Pumpenrades unmittelbar gegenüber.

Ferner ist bevorzugt ein zweites Leitrad vorgesehen, das für eine rein axiale, diagonal-axiale oder axial-diagonale Durchströmung mit Arbeitsmedium im Arbeitsraum angeordnet ist. Demgemäß strömt das Arbeitsmedium teilweise radial und teilweise axial oder ausschließlich axial in das zweite Leitrad ein und ausschließlich axial beziehungsweise teilweise axial und teilweise radial aus dem zweiten Leitrad aus.

Das zweite Leitrad ist insbesondere in Strömungsrichtung des Arbeitsmediums im Arbeitsmediumkreislauf hinter dem Pumpenrad angeordnet.

Eine Eintrittsgitterkante des ersten Leitrades beziehungsweise die Eintrittskanten der Schaufeln des ersten Leitrades liegen bezüglich der Drehachse des Pumpenrades und des Turbinenrades bevorzugt auf einem Radius, der zumindest im Wesentlichen dem Radius der Eintrittsgitterkante beziehungsweise der Eintrittskanten der Schaufeln des Turbinenrades entspricht. Beispielsweise beträgt der Radius der Eintrittsgitterkante des ersten Leitrades das 0,8-fache bis 1,2-fache, insbesondere das 0,9-fache bis 1,1-fache oder das 0,95-fache bis 1,05-fache des Radius der Eintrittsgitterkante des Turbinenrades. Bevorzugt beträgt der Radius der Eintrittsgitterkante des ersten Leitrades das 0,9-fache des Radius der Eintrittsgitterkante des Turbinenrades.

Der Radius der Eintrittsgitterkante beziehungsweise der Eintrittskanten der Schaufeln des Pumpenrades beträgt bevorzugt das 1,1-fache bis 1,3-fache, insbesondere das 1,2-fache, des Radius der Eintrittsgitterkante beziehungsweise der Eintrittskanten der Schaufeln des Turbinenrades.

Das zweite Leitrad kann insbesondere als feststehendes Leitrad ausgeführt sein, demgemäß keine um eine Drehachse beziehungsweise gegenüber der Arbeitsmediumströmung verstellbare Schaufeln aufweisen.

Gemäß einer Ausführungsform ist das zweite Leitrad mit Splitter-Schaufeln im Austrittsbereich ausgestattet. Das bedeutet, dass das zweite Leitrad eine Vielzahl von Leitschaufeln aufweist, die in zwei Gruppen aneinander angrenzend, hintereinander im Arbeitsraum positioniert sind, wobei die Anzahl der Leitschaufeln der ersten Gruppe kleiner ist als die Anzahl der Leitschaufeln der zweiten Gruppe oder auch gleich sein kann. Die Leitschaufeln der ersten Gruppe können beispielsweise eine vergleichsweise lange axiale Erstreckung aufweisen, insbesondere eine längere axiale Erstreckung als radiale Erstreckung. Die Leitschaufeln können eine vorbestimmte Dicke aufweisen, um das Arbeitsmedium zu führen.

Gemäß einer Ausführungsform der Erfindung sind drei Leiträder im Arbeitsraum vorgesehen, beispielsweise ein erstes Leitrad in einem radial durchströmten Bereich des Arbeitsraumes, ein zweites Leitrad auf einem äußeren Durchmesser in einem axial durchströmten Bereich des Arbeitsraumes und ein drittes Leitrad in einem axial durchströmten Bereich auf einem radial inneren Durchmesser des Arbeitsraumes in Strömungsrichtung des Arbeitsmediums hinter dem Turbinenrad. Das dritte Leitrad kann beispielsweise eine Tragfunktion für Bauteile beziehungsweise Wandteile aufweisen, die den Arbeitsraum bezogen auf den Arbeitsmediumkreislauf radial innen begrenzen, das heißt welche die Meridiankontur des Arbeitsraumes ausformen.

Der Arbeitsraum ist insbesondere hohltorusförmig, das heißt er weist in einem Axialschnitt auf jeder Seite der Drehachse des hydrodynamischen Wandlers eine Ringform auf, wobei die Ringform von einer Kreisringform abweichen kann und insbesondere eine variierende Dicke beziehungsweise einen variablen Querschnitt über dem Umfang der Ringform aufweisen kann. In anderen Worten wird der mit dem Arbeitsmedium durchströmte Arbeitsraum des Wandlers durch eine innere und eine äußere ringförmige Meridianprofilkontur begrenzt, die symmetrisch um die Drehachse des Wandlers umlaufend den Arbeitsraum des Wandlers ausbilden, indem die Schaufelräder angeordnet sind. Die Kanalbreite, das heißt der Abstand der äußeren zu der inneren Meridianprofilkontur variiert insbesondere in geeigneter Form entsprechend der Anforderungen in den einzelnen Abschnitten des Wandlers in der Durchströmungsrichtung.

Wenn das zuvor genannte verstellbare erste Leitrad und das feststehende zweite Leitrad vorgesehen sind, und ferner im Arbeitsraum ein drittes Leitrad vorgesehen ist, so ist dieses dritte Leitrad vorteilhaft für eine rein axiale Durchströmung mit Arbeitsmedium positioniert.

Bevorzugt ist das zweite Leitrad auf einem größeren Durchmesser als das erste Leitrad positioniert und das dritte Leitrad ist auf einem kleineren Durchmesser als das erste Leitrad positioniert.

Gemäß einer Ausführungsform der Erfindung ist wenigstens ein viertes Leitrad im Arbeitsraum vorgesehen. Ein solches viertes Leitrad wird bevorzugt vom Arbeitsmedium diagonal-zentripetal oder rein zentripetal durchströmt. Das vierte Leitrad ist bevorzugt zwischen dem zweiten Leitrad und dem Turbinenrad positioniert, insbesondere unmittelbar vor dem Turbinenrad, sodass die Austrittsgitterkante beziehungsweise die Austrittskante der Schaufeln des vierten Leitrades der Eintrittsgitterkante des Turbinenrades unmittelbar gegenüberstehen, ohne dass ein weiteres Rad oder Schaufeln zwischengeordnet sind.

Ein solches viertes Leitrad wird insbesondere, jedoch nicht zwingend, mit einem einfachen zweiten Leitrad kombiniert, das keine Splitter-Schaufeln aufweist.

Selbstverständlich ist es auch möglich, das zweite Leitrad als einfaches Leitrad ohne Splitter-Schaufeln auszuführen und das vierte Leitrad axial durchströmt oder axial-diagonal durchströmt hinter dem zweiten Leitrad zu positionieren.

Günstig ist, wenn das Verhältnis eines inneren Durchmessers des Arbeitsraumes zu einem äußeren Durchmesser des Arbeitsraumes weniger als 0,2 oder weniger als 0,1 beträgt. Gemäß einer Ausführungsform beträgt das Verhältnis des inneren Durchmessers (an der Hubseite der Meridiankontur) zu einem äußeren Durchmesser entsprechend 0,1.

Bevorzugt beträgt ein Verhältnis einer Breite des Arbeitsraumes in Richtung einer Drehachse des Pumpenrades und Turbinenrades zu einem äußeren Durchmesser des Arbeitsraumes weniger als 0,5 oder weniger als 0,4, beispielsweise 0,38 oder 0,485.

Eine Anordnung mit einem erfindungsgemäßen hydrodynamischen Wandler weist beispielsweise eine Antriebsmaschine und eine Mehrphasenpumpe auf, wobei die Mehrphasenpumpe von der Antriebsmaschine angetrieben wird. In der Triebverbindung zwischen der Antriebsmaschine und der Mehrphasenpumpe ist ein erfindungsgemäßer hydrodynamischer Wandler vorgesehen.

Mehrphasenpumpen sind insbesondere zur Förderung eines Flüssigkeits-GasGemisches geeignet und es sind Maßnahmen getroffen, damit sich vor dem Pumpenlaufrad der Mehrphasenpumpe kein Luftsack bildet. Damit ist ein Trockenlaufen der Pumpe ausgeschlossen.

Bevorzugt ist die Saugseite der Mehrphasenpumpe um ein bestimmtes Maß gedrosselt, damit die Mehrphasenpumpe Gas selbsttätig ansaugen kann.

Mit einer solchen Mehrphasenpumpe wird gemäß einer Ausführungsform der Erfindung insbesondere Öl und/oder Gas gefördert.

Ein erfindungsgemäßer hydrodynamischer Wandler kann beispielsweise ein Auslegungsdrehzahlverhältnis zwischen 1,8 und 2,0 und einen Arbeitsbereich bis zu 2,3 aufweisen.

Die Schaufeln des verstellbaren Leitrades sind bevorzugt einzeln drehbar, in einem Drehbereich, geeignet zur Darstellung eines maximal geöffneten bis zu einem komplett geschlossenen Strömungskanal im Leitrad. Wenn ein axial inneres Leitrad vorgesehen ist, so kann dieses zur Ausbildung einer gewünschten Meridianprofilkontur im Bereich zwischen dem Turbinenrad und dem Pumpenrad vorgesehen sein und zudem Bauteile zur Verstellung der Leitschaufeln des verstellbaren Leitrades aufnehmen.

Die Schaufelanzahl der einzelnen Schaufelräder des hydrodynamischen Wandlers kann unter Berücksichtigung aller Anforderungen vergleichsweise gering ausgeführt sein.

Ein erfindungsgemäßer Wandler weist eine gute Völligkeit auf, das bedeutet einen breiten Verlauf des Wirkungsgrades. So kann der Wirkungsgrad beispielsweise in einem Drehzahlverhältnisbereich zwischen 1,3 und 2,2 oberhalb von 75% liegen. Ferner kann der Wirkungsgrad in einem Drehzahlverhältnisbereich zwischen 1,4 und 2,4 oberhalb von 75% liegen. Das Drehzahlverhältnis beschreibt die Drehzahl des Turbinenrades bezogen auf die Drehzahl des Pumpenrades. Spitzenwirkungsgrade können zwischen 80 und 82% oder sogar darüber liegen.

Der Auslegungsdrehzahlverhältnisbereich mit dem größten Wirkungsgrad, beispielsweise von mehr als 78 oder 80%, beträgt beispielsweise 1,8 bis 2,2.

Die Druckziffer psi für das Pumpenrad kann beispielsweise zwischen 1,25 und 3 liegen, und die Lieferzahl phi bei zumindest annähernd 1,1. Die Leistungsaufnahme des Pumpenrades (Lambdawert) liegt bevorzugt bei zumindest annähernd 0,6×10³.

Der Lambdaverlauf über dem zunehmenden Drehzahlverhältnis kann leicht fallend ausgeführt sein.

Gemäß einer Ausführungsform der Erfindung ist der Wandler derart ausgeführt, dass die Wandlung stets kleiner als 0,7 ist, das heißt, es gibt keinen Kupplungspunkt, das Drehmoment des Turbinenrades ist im gesamten Drehzahlverhältnisbereich kleiner als das Drehmoment des Pumpenrades.

Die bevorzugte Anordnung des verstellbaren Leitrades unmittelbar vor dem Pumpenrad ermöglicht ein besonders gut gestaffeltes Kennfeld und damit eine gute Beeinflussbarkeit der Leistungsübertragung des Wandlers. Unter der Staffelung wird der Abstand der einzelnen Kennlinien der Leistungsaufnahme des Pumpenrades und auch des Turbinenraddrehmomentes proportional zum Verdrehwinkel der Stellradschaufeln (Schaufeln des ersten Leitrades) verstanden. Dabei kann die Anordnung des verstellbaren Leitrades unmittelbar vor dem Pumpenrad sowohl durch ein rein zentrifugal durchströmtes Leitrad als auch durch ein axial durchströmtes Leitrad bei der entsprechenden Positionierung im Arbeitsmediumkreislauf erreicht werden.

Der hydrodynamische Wandler ist bevorzugt drehzahlbegrenzend, das heißt, das Turbinenrad sorgt bei zunehmenden Drehzahlen oberhalb des oberen Arbeitsbereich-Drehzahlverhältnisses für ein Zusammenbrechen des umlaufenden Massenstromes des Arbeitsmediums und zum damit verbundenen unmittelbaren Erreichen des Durchgangspunktes. Insbesondere ist der hydrodynamische Wandler oberhalb eines Drehzahlverhältnisses von 3 selbst drehzahlbegrenzend.

Die Anordnung der Schaufelräder, insbesondere die Positionierung von Pumpen- und Turbinenrad erfolgt derart, dass diese ein Auslegungsdrehzahlverhältnis zwischen Turbinen- und Pumpenraddrehzahl im Bereich 1.8 bis 2.0 ermöglicht, sowie einen Arbeitsbereich bis zu 2.3. Somit handelt es sich bei dieser Art von Wandler um einen schnelllaufenden Wandler.

Die Erfindung soll nachfolgend anhand von Ausführungsbeispielen und den Figuren exemplarisch erläutert werden.

Es zeigen:
- Figur 1: ein Ausführungsbeispiel für einen erfindungsgemäßen schnelllaufenden hydrodynamischen Wandler;
- Figur 2: ein Ausführungsbeispiel für eine erfindungsgemäße Anordnung mit einer Antriebsmaschine, einem hydrodynamischen Wandler und einer Mehrphasenpumpe;
- Figur 3: eine weitere Darstellung entsprechend der Figur 1 mit einer abgewandelten Anordnung von Schaufelrädern;
- Figur 4: eine Darstellung entsprechend der Figur 3 mit einer Anordnung von Schaufelrädern mit Splitter-Schaufeln des zweiten Leitrades.

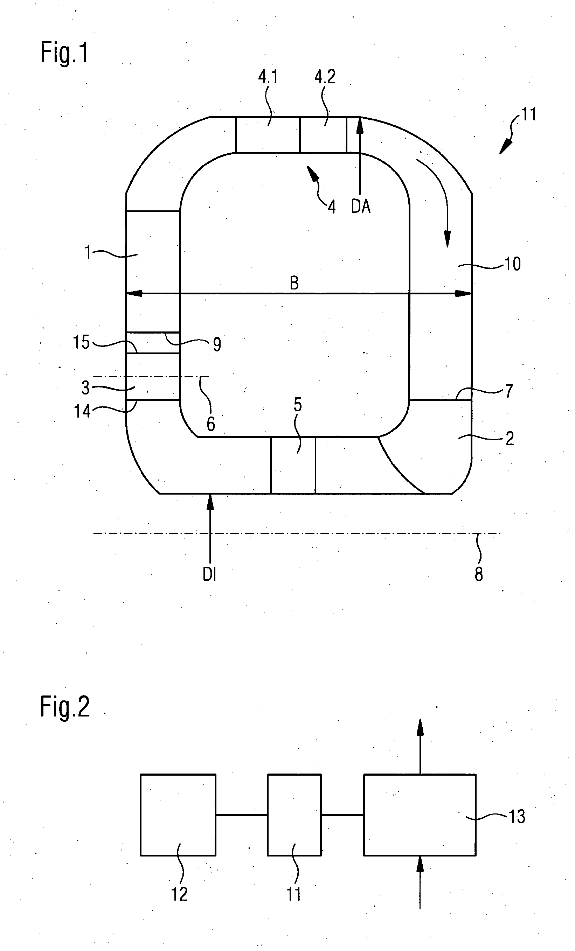

In der Figur 1 ist ein schematischer Axialschnitt durch den Arbeitsraum 10 eines hydrodynamischen Wandlers 11 auf einer Seite der Drehachse 8 gezeigt. Der Arbeitsraum weist einen inneren Durchmesser DI, einen äußeren Durchmesser DA und eine Breite B auf, jeweils bezogen auf eine äußere Konturlinie des hohltorusförmigen Arbeitsraumes 10 beziehungsweise des Meridianprofiles dieses Arbeitsraumes 10.

Im Arbeitsraum 10 ist ein zentrifugal durchströmtes Pumpenrad 1 angeordnet, sowie ein zentripetal-diagonal durchströmtes Turbinenrad 2. Die Eintrittsgitterkante 7 des Turbinenrades 2 liegt auf einem kleineren Radius als die Eintrittsgitterkante 9 des Pumpenrades 1. Das Pumpenrad 1 ist in etwa auf dem mittleren Durchmesser des Arbeitsraumes 10 angeordnet, das Turbinenrad 2 erstreckt sich zumindest im Wesentlichen bis zum inneren Durchmesser DI des Arbeitsraumes 10.

Zwischen dem Turbinenrad 2 und dem Pumpenrad 1 ist ein feststehendes Leitrad 5 angeordnet, nämlich im radial inneren Bereich des Arbeitsraumes 10, gefolgt von einem verstellbaren Leitrad 3, radial etwas weiter außerhalb positioniert vor der Eintrittsgitterkante 9 des Pumpenrades 1. Es ist ferner im radial äußeren Bereich des Arbeitsraumes 10 ein weiteres Leitrad 4 vorgesehen.

Vorliegend wird das Leitrad 3 vor dem Pumpenrad 1 als erstes Leitrad 3 bezeichnet, das um die Leitraddrehachse 6 verstellbar ist. Das im radial äußeren Bereich des Arbeitsraumes 10 vorgesehene Leitrad 4 wird als zweites Leitrad 4 bezeichnet, das zwei Gruppen von Leitschaufeln 4.1, 4.2 aufweist, wobei die Anzahl der Leitschaufeln 4.2 der zweiten Gruppe größer ist als oder gleich ist wie die Anzahl der Leitschaufeln 4.1 der ersten Gruppe. Das im radial inneren Bereich des Arbeitsraumes 10 vorgesehene Leitrad 5 wird als drittes Leitrad 5 bezeichnet.

Das erste Leitrad 3 weist eine Eintrittsgitterkante 14 und eine Austrittsgitterkante 15 auf. Die Austrittsgitterkante 15 steht der Eintrittsgitterkante 7 des Pumpenrades 1 unmittelbar gegenüber. Die Eintrittsgitterkante 14 des ersten Leitrades 3 ist parallel zur Drehachse 8 positioniert, sodass das erste Leitrad 3 rein zentrifugal vom Arbeitsmedium durchströmt wird.

In der Figur 2 ist eine Anordnung mit einer Antriebsmaschine 12 und einer von der Antriebsmaschine 12 angetriebenen Mehrphasenpumpe 13, die ein Flüssigkeits-Luft-Gemisch oder Flüssigkeits-Gas-Gemisch fördert, dargestellt. Der Antrieb der Mehrphasenpumpe 13 erfolgt dabei über einen erfindungsgemäß ausgeführten hydrodynamischen Wandler 11, wie dieser beispielsweise schematisch in der Figur 1 gezeigt ist.

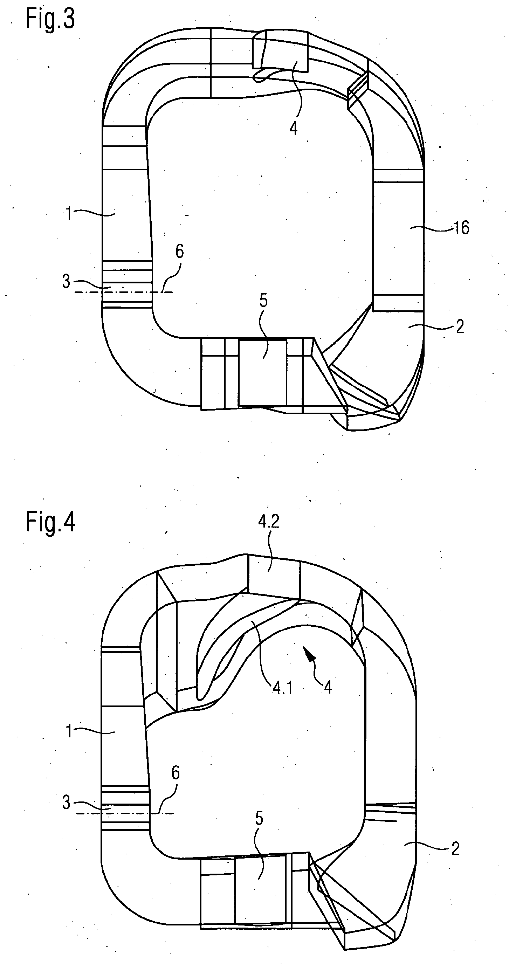

Gemäß der Figur 3 ist das zweite Leitrad 4 als einfaches Leitrad, das heißt ohne Splitter-Schaufeln ausgeführt. Stattdessen ist dem zweiten Leitrad 4 ein viertes Leitrad 16 in Strömungsrichtung des Arbeitsmediums nachgeschaltet. Das vierte Leitrad 16 ist unmittelbar vor dem Turbinenrad 2 positioniert und wird im gezeigten Ausführungsbeispiel rein zentripetal durchströmt. Alternativ könnte jedoch auch eine diagonal-zentripetale Durchströmung vorgesehen sein.

Bei der Ausgestaltung gemäß der Figur 4 wird wiederum auf das vierte Leitrad verzichtet. Stattdessen ist das zweite Leitrad 4 mit Splitter-Schaufeln ausgeführt, umfassend eine erste Gruppe von Leitschaufeln 4.1 und eine zweite Gruppe von Leitschaufeln 4.2, wobei die Ausrichtung der ersten Gruppe von Leitschaufeln 4.1 und/oder deren Anzahl verschieden ist zu der Ausrichtung der zweiten Gruppe von Leitschaufeln 4.2 und/oder deren Anzahl.

### Bezugszeichenliste

- 1: Pumpenrad
- 2: Turbinenrad
- 3: erstes Leitrad
- 4: zweites Leitrad
- 4.1: erste Gruppe von Leitschaufeln
- 4.2: zweite Gruppe von Leitschaufeln
- 5: drittes Leitrad
- 6: Leitraddrehachse
- 7: Eintrittsgitterkante
- 8: Drehachse
- 9: Eintrittsgitterkante
- 10: Arbeitsraum
- 11: hydrodynamischer Wandler
- 12: Antriebsmaschine
- 13: Mehrphasenpumpe
- 14: Eintrittsgitterkante
- 15: Austrittsgitterkante
- 16: viertes Leitrad

## Patentansprüche

1. Hydrodynamischer Wandler (11) mit einem Arbeitsraum (10) zur Ausbildung eines hydrodynamischen Arbeitsmediumkreislaufes, wobei im Arbeitsraum (10) wenigstens ein Pumpenrad (1), wenigstens ein Turbinenrad (2) und wenigstens ein Leitrad (3, 4, 5) positioniert sind; wobei das Pumpenrad (1) zentrifugal oder zentrifugal-diagonal mit dem Arbeitsmedium durchströmt ist und das Turbinenrad (2) zentripetal oder zentripetal-diagonal mit dem Arbeitsmedium durchströmt ist; wobei eine Eintrittsgitterkante (7) des Turbinenrades (2) bezüglich einer Drehachse (8) des Pumpenrades (1) und des Turbinenrades (2) auf einem kleineren Radius liegt als oder auf demselben Radius liegt wie eine Eintrittsgitterkante (9) des Pumpenrades (1),
**dadurch gekennzeichnet, dass**
ein erstes Leitrad (3) im Arbeitsraum (10) in Strömungsrichtung des Arbeitsmediums vor dem Pumpenrad (1) vorgesehen ist, das für eine rein zentrifugale oder diagonal-zentrifugale Durchströmung mit dem Arbeitsmedium angeordnet ist.

2. Hydrodynamischer Wandler (11) gemäß Anspruch 1, **dadurch gekennzeichnet, dass** eine Eintrittsgitterkante (14) des ersten Leitrades (3) bezüglich der Drehachse (8) des Pumpenrades (1) und des Turbinenrades (2) auf einem Radius liegt, der zumindest im Wesentlichen dem Radius der Eintrittsgitterkante (7) des Turbinenrades (2) entspricht.

3. Hydrodynamischer Wandler (11) gemäß Anspruch 2, **dadurch gekennzeichnet, dass** der Radius der Eintrittsgitterkante (14) des ersten Leitrades (3) das 0,8-fache bis 1,2-fache oder das 0,9-fache bis 1,1 -fache oder das 0,95-fache bis 1,05-fache des Radius der Eintrittsgitterkante (7) des Turbinenrades (2) beträgt.

4. Hydrodynamischer Wandler (11) gemäß einem der Ansprüche 1 bis 3, **dadurch gekennzeichnet, dass** das erste Leitrad (3) in Strömungsrichtung des Arbeitsmediums unmittelbar vor dem Pumpenrad (1) angeordnet ist.

5. Hydrodynamischer Wandler (11) gemäß einem der Ansprüche 1 bis 4, **dadurch gekennzeichnet, dass** ein zweites Leitrad (4) im Arbeitsraum (10) vorgesehen ist, das für eine rein axiale oder diagonal-axiale oder axial-diagonale Durchströmung mit dem Arbeitsmedium angeordnet ist.

6. Hydrodynamischer Wandler (11) gemäß einem der Ansprüche 1 bis 5, **dadurch gekennzeichnet, dass** das erste Leitrad (3) mit um eine Leitraddrehachse (6) verstellbaren, gegenüber der Arbeitsmediumströmung variabel anstellbaren Leitschaufeln ausgeführt ist, wobei die Leitraddrehachse (6) insbesondere parallel oder schräg zu der Drehachse (8) des Pumpenrades (1) und des Turbinenrades (2) verläuft.

7. Hydrodynamischer Wandler (11) gemäß Anspruch 5 oder gemäß den Ansprüchen 5 und 6, **dadurch gekennzeichnet, dass** das zweite Leitrad (4) als feststehendes Leitrad (4) ausgeführt ist.

8. Hydrodynamischer Wandler (11) gemäß Anspruch 5 und insbesondere einem der Ansprüche 6 oder 7, **dadurch gekennzeichnet, dass** das zweite Leitrad (4) eine Vielzahl von Leitschaufeln (4.1, 4.2) aufweist, die in zwei Gruppen aneinander angrenzend, hintereinander im Arbeitsraum (10) positioniert sind, wobei die Anzahl der Leitschaufeln (4.1) der ersten Gruppe kleiner als die Anzahl der Leitschaufeln (4.2) der zweiten Gruppe ist.

9. Hydrodynamischer Wandler (11) gemäß einem der Ansprüche 1 bis 8, **dadurch gekennzeichnet, dass** drei Leiträder (3, 4, 5) im Arbeitsraum (10) vorgesehen sind.

10. Hydrodynamischer Wandler (11) gemäß Anspruch 5 und insbesondere einem der Ansprüche 6 bis 9, **dadurch gekennzeichnet, dass** ein drittes Leitrad (5) im Arbeitsraum (10) vorgesehen ist, das für eine rein axiale Durchströmung mit dem Arbeitsmedium positioniert ist.

11. Hydrodynamischer Wandler (11) gemäß Anspruch 10, **dadurch gekennzeichnet, dass** das zweite Leitrad (4) auf einem größeren Durchmesser als das erste Leitrad (3) positioniert ist und das dritte Leitrad (5) auf einem kleineren Durchmesser als das erste Leitrad (3) positioniert ist.

12. Hydrodynamischer Wandler (11) gemäß Anspruch 11, wenn dieser nicht auf Anspruch 6 rückbezogen ist, **dadurch gekennzeichnet, dass** das erste Leitrad (3) oder das dritte Leitrad (5) mit um eine Leitraddrehachse (6) verstellbaren, gegenüber der Arbeitsmediumströmung im Betrieb des Wandlers (11) anstellbaren Leitschaufeln ausgeführt ist, wobei insbesondere eines dieser beiden Leiträder (3, 5), das frei von verstellbaren Leitschaufeln ausgeführt ist, den Arbeitsraum (10) bezogen auf den Arbeitsmediumkreislauf radial innen begrenzende Wandteile trägt.

13. Hydrodynamischer Wandler (11) gemäß einem der Ansprüche 1 bis 12, **dadurch gekennzeichnet, dass** ein Verhältnis eines inneren Durchmessers (DI) des Arbeitsraumes (10) zu einem äußeren Durchmesser (DA) des Arbeitsraumes (10) weniger als 0,2 oder 0,1 beträgt.

14. Hydrodynamischer Wandler (11) gemäß einem der Ansprüche 1 bis 13, **dadurch gekennzeichnet, dass** ein Verhältnis einer Breite (B) des Arbeitsraumes (10) in Richtung einer Drehachse (8) des Pumpenrades (1) und des Turbinenrades (2) zu einem äußeren Durchmesser (DA) des Arbeitsraumes (10) weniger als 0,5 oder 0,4 beträgt.

15. Hydrodynamischer Wandler (11) gemäß einem der Ansprüche 1 bis 14, **dadurch gekennzeichnet, dass** der Radius der Eintrittsgitterkante (9) des Pumpenrades (1) das 1,1-fache bis 1,3-fache, insbesondere das 1,2-fache des Radius der Eintrittsgitterkante (7) des Turbinenrades (2) beträgt.

16. Hydrodynamischer Wandler (11) gemäß einem der Ansprüche 1 bis 15, **dadurch gekennzeichnet, dass** die Anordnung der Schaufelräder, insbesondre die Positionierung von Pumpen- und Turbinenrad ein Auslegungsdrehzahlverhältnis zwischen Turbinen- und Pumpenraddrehzahl im Bereich 1.8 bis 2.0 ermöglicht, sowie einen Arbeitsbereich bis zu 2.3.

17. Anordnung mit einer Antriebsmaschine (12) und einer von dieser angetriebenen Mehrphasenpumpe (13), **dadurch gekennzeichnet, dass** in der Triebverbindung zwischen der Antriebsmaschine (12) und der Mehrphasenpumpe (13) ein hydrodynamischer Wandler (11) gemäß einem der Ansprüche 1 bis 16 vorgesehen ist.

## Claims

1. Hydrodynamic converter (11) having a working chamber (10) for forming a hydrodynamic working medium circuit, wherein at least one pump wheel (1), at least one turbine wheel (2) and at least one guide wheel (3, 4, 5) are positioned in the working chamber (10); wherein the working medium flows centrifugally or centrifugally-diagonally through the pump wheel (1) and the working medium flows centripetally or centripetally-diagonally through the turbine wheel (2); wherein a leading edge (7) of the turbine wheel (2) lies on a smaller radius with respect to an axis of rotation (8) of the pump wheel (1) and the turbine wheel (2) or on the same radius as a leading edge (9) of the pump wheel (1),
**characterized in that**
the first guide wheel (3) is provided in the working chamber (10), upstream of the pump wheel (1) in the flow direction of the working medium, and is arranged for the working medium to flow through purely centrifugally or diagonally-centrifugally.

2. Hydrodynamic converter (11) according to Claim 1, **characterized in that** a leading edge (14) of the first guide wheel (3) lies on a radius with respect to the axis of rotation (8) of the pump wheel (1) and the turbine wheel (2) which corresponds at least substantially to the radius of the leading edge (7) of the turbine wheel (2).

3. Hydrodynamic converter (11) according to Claim 2, **characterized in that** the radius of the leading edge (14) of the first guide wheel (3) is 0.8 times to 1.2 times or 0.9 times to 1.1 times or 0.95 times to 1.05 times the radius of the leading edge (7) of the turbine wheel (2).

4. Hydrodynamic converter (11) according to one of Claims 1 to 3, **characterized in that** the first guide wheel (3) is arranged immediately upstream of the pump wheel (1) in the flow direction of the working medium.

5. Hydrodynamic converter (11) according to one of Claims 1 to 4, **characterized in that** a second guide wheel (4) is provided in the working chamber (10) and is arranged for the working medium to flow through purely axially or diagonally-axially or axially-diagonally.

6. Hydrodynamic converter (11) according to one of Claims 1 to 5, **characterized in that** the first guide wheel (3) is designed with guide vanes that can be adjusted about a guide wheel axis of rotation (6) and can be set variably with respect to the working medium flow, wherein the guide wheel axis of rotation (6) in particular extends parallel or obliquely relative to the axis of rotation (8) of the pump wheel (1) and of the turbine wheel (2).

7. Hydrodynamic converter (11) according to Claim 5 or according to Claims 5 and 6, **characterized in that** the second guide wheel (4) is designed as a stationary guide wheel (4).

8. Hydrodynamic converter (11) according to Claim 5 and in particular one of Claims 6 or 7, **characterized in that** the second guide wheel (4) has a large number of guide vanes (4.1, 4.2), which are positioned in two groups adjacent to each other and one after the other in the working chamber (10), wherein the number of guide vanes (4.1) of the first group is smaller than the number of guide vanes (4.2) of the second group.

9. Hydrodynamic converter (11) according to one of Claims 1 to 8, **characterized in that** three guide wheels (3, 4, 5) are provided in the working chamber (10).

10. Hydrodynamic converter (11) according to Claim 5 and in particular one of Claims 6 to 9, **characterized in that** a third guide wheel (5) is provided in the working chamber (10) and is positioned for the working medium to flow through purely axially.

11. Hydrodynamic converter (11) according to Claim 10, **characterized in that** the second guide wheel (4) is positioned on a larger diameter than the first guide wheel (3), and the third guide wheel (5) is positioned on a smaller diameter than the first guide wheel (3).

12. Hydrodynamic converter (11) according to Claim 11, if the latter does not refer back to Claim 6, **characterized in that** the first guide wheel (3) or the third guide wheel (5) is designed with guide vanes that can be adjusted about a guide wheel axis of rotation (6) and can be set with respect to the working medium flow during operation of the converter (11), wherein, in particular, one of these two guide wheels (3, 5), which is designed to be free of adjustable guide vanes, bears wall parts delimiting the working chamber (10) radially on the inside with respect to the working medium circuit.

13. Hydrodynamic converter (11) according to one of Claims 1 to 12, **characterized in that** a ratio of an internal diameter (DI) of the working chamber (10) to an external diameter (DA) of the working chamber (10) is less than 0.2 or 0.1.

14. Hydrodynamic converter (11) according to one of Claims 1 to 13, **characterized in that** a ratio of a width (B) of the working chamber (10) in the direction of an axis of rotation (8) of the pump wheel (1) and of the turbine wheel (2) to an external diameter (DA) of the working chamber (10) is less than 0.5 or 0.4.

15. Hydrodynamic converter (11) according to one of Claims 1 to 14, **characterized in that** the radius of the leading edge (9) of the pump wheel (1) is 1.1 times to 1.3 times, in particular 1.2 times, the radius of the leading edge (7) of the turbine wheel (2).

16. Hydrodynamic converter (11) according to one of Claims 1 to 15, **characterized in that** the arrangement of the vane wheels, in particular the positioning of the pump wheel and turbine wheel, permits a design speed ratio between the turbine speed and pump wheel speed in the range from 1.8 to 2.0, and a working range of up to 2.3.

17. Assembly having a drive machine (12) and a multiphase pump (13) driven thereby, **characterized in that** a hydrodynamic converter (11) according to one of Claims 1 to 16 is provided in the drive connection between the drive machine (12) and the multiphase pump (13).

## Revendications

1. Convertisseur hydrodynamique (11) comprenant un espace de travail (10) pour former un circuit de fluide de travail hydrodynamique, au moins une roue de pompe (1), au moins une roue de turbine (2) et au moins une roue de guidage (3, 4, 5) étant positionnées dans l'espace de travail (10) ;
la roue de pompe (1) étant traversée par le fluide de travail de manière centrifuge ou centrifuge-diagonale et la roue de turbine (2) étant traversée par le fluide de travail de manière centripète ou centripète-diagonale ; un bord de grille d'entrée (7) de la roue de turbine (2) par rapport à un axe de rotation (8) de la roue de pompe (1) et de la roue de turbine (2) étant situé sur un rayon plus petit ou étant situé sur le même rayon qu'un bord de grille d'entrée (9) de la roue de pompe (1),
**caractérisé en ce que**
une première roue de guidage (3) est prévue dans l'espace de travail (10) avant la roue de pompe (1) dans la direction d'écoulement du fluide de travail, laquelle est agencée pour une traversée purement centrifuge ou diagonale-centrifuge par le fluide de travail.

2. Convertisseur hydrodynamique (11) selon la revendication 1, **caractérisé en ce qu'**un bord de grille d'entrée (14) de la première roue de guidage (3) par rapport à l'axe de rotation (8) de la roue de pompe (1) et de la roue de turbine (2) est situé sur un rayon qui correspond au moins essentiellement au rayon du bord de grille d'entrée (7) de la roue de turbine (2).

3. Convertisseur hydrodynamique (11) selon la revendication 2, **caractérisé en ce que** le rayon du bord de grille d'entrée (14) de la première roue de guidage (3) est de 0,8 fois à 1,2 fois ou de 0,9 fois à 1,1 fois ou de 0,95 fois à 1,05 fois le rayon du bord de grille d'entrée (7) de la roue de turbine (2).

4. Convertisseur hydrodynamique (11) selon l'une quelconque des revendications 1 à 3, **caractérisé en ce que** la première roue de guidage (3) est agencée directement avant la roue de pompe (1) dans la direction d'écoulement du fluide de travail.

5. Convertisseur hydrodynamique (11) selon l'une quelconque des revendications 1 à 4, **caractérisé en ce qu'**une deuxième roue de guidage (4) est prévue dans l'espace de travail (10), qui est agencée pour une traversée purement axiale ou diagonale-axiale ou axiale-diagonale par le fluide de travail.

6. Convertisseur hydrodynamique (11) selon l'une quelconque des revendications 1 à 5, **caractérisé en ce que** la première roue de guidage (3) est réalisée avec des aubes de guidage réglables autour d'un axe de rotation de roue de guidage (6), pouvant être inclinées de manière variable par rapport au courant de fluide de travail, l'axe de rotation de roue de guidage (6) étant notamment parallèle ou oblique par rapport à l'axe de rotation (8) de la roue de pompe (1) et de la roue de turbine (2).

7. Convertisseur hydrodynamique (11) selon la revendication 5 ou selon les revendications 5 et 6, **caractérisé en ce que** la deuxième roue de guidage (4) est réalisée sous forme de roue de guidage fixe (4).

8. Convertisseur hydrodynamique (11) selon la revendication 5 et notamment l'une quelconque des revendications 6 ou 7, **caractérisé en ce que** la deuxième roue de guidage (4) présente une pluralité d'aubes de guidage (4.1, 4.2), qui sont positionnées en deux groupes, adjacentes les unes aux autres, les unes derrière les autres dans l'espace de travail (10), le nombre d'aubes de guidage (4.1) du premier groupe étant inférieur au nombre d'aubes de guidage (4.2) du deuxième groupe.

9. Convertisseur hydrodynamique (11) selon l'une quelconque des revendications 1 à 8, **caractérisé en ce que** trois roues de guidage (3, 4, 5) sont prévues dans l'espace de travail (10).

10. Convertisseur hydrodynamique (11) selon la revendication 5 et notamment l'une quelconque des revendications 6 à 9, **caractérisé en ce qu'**une troisième roue de guidage (5) est prévue dans l'espace de travail (10), laquelle est positionnée pour une traversée purement axiale par le fluide de travail.

11. Convertisseur hydrodynamique (11) selon la revendication 10, **caractérisé en ce que** la deuxième roue de guidage (4) est positionnée sur un diamètre plus grand que la première roue de guidage (3) et la troisième roue de guidage (5) est positionnée sur un diamètre plus petit que la première roue de guidage (3).

12. Convertisseur hydrodynamique (11) selon la revendication 11, lorsque celle-ci ne se réfère pas à la revendication 6, **caractérisé en ce que** la première roue de guidage (3) ou la troisième roue de guidage (5) est réalisée avec des aubes de guidage réglables autour d'un axe de rotation de roue de guidage (6), pouvant être inclinées par rapport au courant de fluide de travail pendant le fonctionnement du convertisseur (11), l'une de ces deux roues de guidage (3, 5), qui est réalisée exempte d'aubes de guidage réglables, portant notamment des parties de paroi délimitant l'espace de travail (10) radialement vers l'intérieur par rapport au circuit de fluide de travail.

13. Convertisseur hydrodynamique (11) selon l'une quelconque des revendications 1 à 12, **caractérisé en ce qu'**un rapport entre un diamètre intérieur (DI) de l'espace de travail (10) et un diamètre extérieur (DA) de l'espace de travail (10) est inférieur à 0,2 ou 0,1.

14. Convertisseur hydrodynamique (11) selon l'une quelconque des revendications 1 à 13, **caractérisé en ce qu'**un rapport entre une largeur (B) de l'espace de travail (10) dans la direction d'un axe de rotation (8) de la roue de pompe (1) et de la roue de turbine (2) et un diamètre extérieur (DA) de l'espace de travail (10) est inférieur à 0,5 ou 0,4.

15. Convertisseur hydrodynamique (11) selon l'une quelconque des revendications 1 à 14, **caractérisé en ce que** le rayon du bord de grille d'entrée (9) de la roue de pompe (1) est de 1,1 fois à 1,3 fois, notamment de 1,2 fois, le rayon du bord de grille d'entrée (7) de la roue de turbine (2).

16. Convertisseur hydrodynamique (11) selon l'une quelconque des revendications 1 à 15, **caractérisé en ce que** l'agencement des roues à aubes, notamment le positionnement de la roue de pompe et de turbine, permet un rapport de vitesse de rotation de conception entre la vitesse de rotation de la roue de turbine et de la roue de pompe (10) dans la plage allant de 1,8 à 2,0, ainsi qu'une plage de travail allant jusqu'à 2,3.

17. Agencement comprenant un moteur d'entraînement (12) et une pompe polyphasée (13) entraînée par celui-ci, **caractérisé en ce qu'**un convertisseur hydrodynamique (11) selon l'une quelconque des revendications 1 à 16 est prévu dans la liaison d'entraînement entre le moteur d'entraînement (12) et la pompe polyphasée (13).
